(19) Europäisches Patentamt
European Patent Office
Office européen des brevets

(11) **EP 1 524 504 B1**

(12) **EUROPÄISCHE PATENTSCHRIFT**

(45) Veröffentlichungstag und Bekanntmachung des Hinweises auf die Patenterteilung:
**21.01.2015 Patentblatt 2015/04**

(51) Int Cl.:
***G01D 5/48*** *(2006.01)*

(21) Anmeldenummer: **04024781.9**

(22) Anmeldetag: **18.10.2004**

(54) **Magnetostriktiver Positionssensor nach dem Laufzeitprinzip**

Magnetostrictive position sensor utilizing the propagation time principle

Capteur de position à magnétostriction selon le principe de temps de propagation

(84) Benannte Vertragsstaaten:
**DE FR GB IT**

(30) Priorität: **16.10.2003 DE 10348195**

(43) Veröffentlichungstag der Anmeldung:
**20.04.2005 Patentblatt 2005/16**

(73) Patentinhaber: **ASM Automation Sensorik Messtechnik GmbH**
**85452 Moosinning (DE)**

(72) Erfinder: **Steinich, Klaus Manfred**
**85604 Zorneding/Pöring (DE)**

(74) Vertreter: **Alber, Norbert et al**
**Hansmann & Vogeser**
**Patent- und Rechtsanwälte**
**Albert-Roßhaupter-Straße 65**
**81369 München (DE)**

(56) Entgegenhaltungen:
| | |
|---|---|
| WO-A-96/35923 | DE-A- 19 753 805 |
| DE-A- 19 917 312 | DE-A1- 3 940 220 |
| DE-A1- 10 164 121 | DE-A1- 19 954 328 |
| GB-A- 2 016 694 | US-A- 5 680 041 |
| US-A- 5 736 855 | US-B1- 6 232 769 |
| US-B1- 6 404 183 | US-B1- 6 559 636 |

**Beschreibung**

**I. Anwendungsgebiet**

Die Erfindung betrifft Positionssensoren, insbesondere deren Detektoreinheit, basierend auf dem Prinzip der Laufzeitmessung von mechanisch-elastischen Impulsen in einem Wellenleiter, die außer diesem Wellenleiter ein relativ hierzu bewegliches, die mechanisch-elastische Welle erzeugendes oder detektierendes Positionselement umfassen.

**II. Technischer Hintergrund**

Der Wellenleiter besteht in der Regel aus einem Rohr, einem Draht oder einem Band, und kann auch als elektrischer Leiter dienen. Der Wellenleiter kann weiterhin in einem formgebenden, linearen oder kreisförmigen Körper aus nichtmagnetischem Material, z. B. Kunststoff oder Metall, zur Aufnahme und Lagerung des Wellenleiters angeordnet sein.

Basierend auf dem Wiedemann-Effekt erzeugt ein in den Wellenleiter eingespeister Strom bei seiner Überlagerung mit einem lateral auf den magnetostriktiven Wellenleiter gerichteten externen Magnetfeld, welches vom Positionselement, insbesondere einem Positionsmagneten, herrührt, einen Torsionsimpuls einer mechanisch-elastischen Welle, der sich mit etwa 2.500 m/s - 6.000 m/s vom Ort der Entstehung, also z.B. der Position des Positionselementes, in beide Richtungen entlang des Wellenleiters ausbreitet.

An einer bestimmten Stelle, üblicherweise an einem Ende des Wellenleiters, wird insbesondere der Torsionsanteil dieses mechanisch-elastischen Impulses von einer Detektoreinheit erfasst, die sich meist in fester Position bezüglich des Wellenleiters befindet. Die Zeitdauer zwischen der Auslösung des Erregerstromimpulses und dem Empfang des mechanischen Impulses ist dabei ein Maß für den Abstand des verschiebbaren Positionselementes, z. B. des Positionsmagneten von der Detektoreinrichtung oder auch der Spule bzw. des Elektromagneten.

Ein typischer solcher Sensor ist im US-Patent 896 714 beschrieben.

Das Hauptaugenmerk der vorliegenden Erfindung liegt auf der Detektoreinrichtung. Diese umfasst eine Detektor-Spule, die entweder um den Wellenleiter herum angeordnet ist oder als sog. Villary-Detektor um ein Villary-Bändchen herum angeordnet ist, welches quer, insbesondere im 90°-Winkel, vom Wellenleiter abstrebt und mit diesem so verbunden, insbesondere mechanisch fixiert, z. B. verschweißt ist, dass der entlang des Wellenleiters laufende Torsionsimpuls im Villary-Bändchen in eine longitudinale Welle transformiert wird. Eine solche longitudinale Welle staucht bzw. dehnt das Villary-Bändchen elastisch im kristallinen Bereich und verändert daher dessen Permeabilität $\mu$. Das Villary-Bändchen besteht zu diesem Zweck aus Material mit möglichst hoher magnetischer Permeabilität $\Delta\mu_r$, z. B. aus Nickel oder einer Nickel-Legierung, etwa in Form eines eigenstabilen Bandmaterials von etwa 0,05 - 0,2 mm Dicke und 0,5 - 1,5 mm Breite.

Wegen

$$\Delta U \approx N \times \frac{\Delta\Phi}{\Delta t} \quad \rightarrow \quad \Delta U \approx N \times \frac{\Delta B \times \Delta A}{\Delta t} = N \times \frac{\mu_0 \times \Delta\mu_r}{\Delta t} \times \frac{I \times N}{L}$$

ist

$$\Delta U \approx \frac{\Delta\mu_r}{\Delta t} \times \mathsf{K}$$

da die Werte für $\mu_o$, I, N, L als konstant angenommen werden können.

Die ein magneto-elastisches Element, z.B. das Villary-Bändchen, durchlaufende Dichtewelle äußert sich somit in einer Spannungsänderung $\Delta U$, die als Nutzsignal an der Detektorspule abgegriffen werden kann.

Wie ersichtlich, ist das Nutzsignal $\Delta U$ umso größer, je größer die Änderung der magnetischen Permeabilität $\Delta\mu_r$ ausfällt.

Zusätzlich ist als Arbeitspunkt bzw. Arbeitsbereich ein solcher Bereich der Kurve $\Delta\mu_r$(H), also der magnetischen Permeabilität aufgetragen über der magnetischen Feldstärke, erwünscht, in dem sich die magnetischen Permeabilität $\Delta\mu_r$ möglichst linear, relativ zur Ursache aber möglichst stark verändert, weshalb versucht wird, die Funktion $\Delta\mu_r$(H) in der Anstiegsflanke möglichst steil auszubilden und den Arbeitsbereich dort, im annähernd linearen Bereich, zu etablieren.

Im Stand der Technik wird zum Einstellen des Arbeitspunktes ein so genannter Bias-Magnet in Form eines Dauermagneten in räumlicher Nähe zur Detektorspule, z.B. parallel zum Villary-Bändchen, angeordnet.

Der Arbeitspunkt der magneto-elastischen Detektoreinheit hängt neben den magnetischen Parametern des Bias-Magneten hauptsächlich von dessen Positionierung relativ zur Detektor-Spule ab.

Dies ist in mehrfacher Hinsicht nachteilig, beispielsweise beim Einsatz des Positionssensors an Stellen, die mechanischen, insbesondere dynamischen mechanischen, Belastungen (oder auch thermischen Belastungen) unterworfen sind, welche die magnetischen Parameter des Bias-Magneten verändern und insbesondere dessen Alterungsprozess beschleunigen, was ebenfalls eine Änderung der magnetischen Parameter zur Folge hat.

Zusätzlich sind alle bei der Herstellung des Bias-Magneten auftretenden Formabweichungen von der Sollform in gleicher Weise nachteilig. Gleiches gilt für die herstellungsbedingten Streuungen der magnetischen Parameter bei der Herstellung des Bias-Magneten.

Ein weiterer Nachteil bestand darin, dass bei zu starker Annäherung des Positionsmagneten an die Detektorspule der Arbeitspunkt negativ verändert wird.

Bei der Detektoreinrichtung gemäß dem Stand der Technik musste daher der Wellenleiter über den Messbereich, innerhalb dessen sich der Positionsmagnet hin und her bewegen konnte, hinaus so weit verlängert werden, dass sich die Detektoreinheit mit der Detektorspule ausreichend weit vom Messbereich entfernt befand, um Störbeeinflussungen auf ein beherrschbares Maß zu reduzieren. Dadurch ergab sich jedoch immer eine Gesamtlänge des Positionssensors, die deutlich größer war als sein Messbereich.

Im folgenden wird die Ausbildung der Detektoreinheit mit koaxial um den Wellenleiter angeordneten Detektor-Spule zugrunde gelegt, ohne die Erfindung hierauf zu beschränken, da diese auch als Villary-Detektor anwendbar ist.

In diesem Zusammenhang sind unterschiedliche Bauformen von Positionssensoren nach dem Laufzeitprinzip einer mechanisch-elastischen Welle mit einem Wellenleiter, einem elektrischen Rückleiter und einer am Wellenleiter im Detektorbereich angeordneten Detektorspule sowie einem sich entlang des Wellenleiters bewegbaren Positionsmagneten bekannt:

Aus der DE 199 17 312 A1 sowie der US 5,680,041 B1 ist es bei solchen Positionssensoren bekannt, dass der Rückleiter rohrförmig ausgebildet ist und die Detektorspule konzentrisch um den Wellenleiter herum angeordnet ist, wobei die letztgenannte Schrift zusätzlich eine Dämpfungseinheit am einen Ende des Positionssensors aufweist.

Aus der US 5,736,855 ist es weiterhin bekannt, bei dem gattungsgemäßen Positionssensor einen Stützschlauch radial zwischen Wellenleiter und einer umgebenden Rohrhülse anzuordnen und ebenfalls am einen Ende des Positionssensors eine Dämpfungseinheit vorzusehen.

Aus der US 6,404,183 B1, die den nächstreichenden Stand der Technik darstellt, ist es bekannt, bei solchen Positionssensoren den Rückleiter hohl auszuführen, und den Wellenleiter mit Hilfe eines diesen umgebenden Abstandsschlauches an einer definierten Position innerhalb des Querschnittes des hohlen Rückleiters anzuordnen.

Diese Schrift zeigt weiterhin, dass die Detektorspule konzentrisch um den Wellenleiter herum angeordnet ist, jedoch diese drei Teile relativ zueinander so bemessen sind, dass über den Großteil der Länge des Wellenleiters keine radialen Kräfte gegen den Wellenleiter aufgebracht werden, mit Ausnahme an definierten axialen Abständen und Stellen bewirkten Lagerungen des Wellenleiters.

### III. Darstellung der Erfindung

### a) Technische Aufgabe

Es ist daher die Aufgabe gemäß der Erfindung, einen gattungsgemäßen Positionssensor zu schaffen, der trotz einer hohen Qualität und guten Auswertbarkeit der von diesem Sensor abgegebenen Signale, insbesondere einem guten Verhältnis von Nutzsignal zu Störsignal, einfach und vor allem kostengünstig herzustellen ist.

### b) Lösung der Aufgabe

Diese Aufgabe wird durch die kennzeichnenden Merkmale des Anspruchs 1 gelöst. Vorteilhafte Ausführungsformen ergeben sich aus den Unteransprüchen.

Im Mittelbereich, also im Wesentlichen dem Messbereich, des Sensors befindet sich der Wellenleiter in einem hohlen Rückleiter aus elektrisch leitfähigem, jedoch nicht magnetischem Material, so dass dieser hohle Rückleiter selbst kein magnetisches Feld im Inneren erzeugt und dieses folglich lediglich durch den elektrisch beaufschlagten Wellenleiter selbst erzeugt sowie durch den Positionsmagneten an der Messstelle beeinflusst wird. Dies ergibt ein besonders gutes Verhältnis von Nutzsignal zu Störsignal.

Dieser Effekt tritt bereits auf, wenn im Querschnitt betrachtet der Wellenleiter auch nur teilweise von dem hohlen Rückleiter umschlossen wird, und auch, wenn die Querschnittform des hohlen Rückleiters von der eines kreisringförmigen Querschnitts abweicht. Der hohle Rückleiter kann also ein geschlitztes Rohr ebenso sein wie zwei gegeneinander gelegte U-Profile, zwei mit der offenen Seite ineinander gesteckte U-Profile oder zwei gegeneinander gelegte Winkelprofile unter Bildung eines Rechteckes oder eine U-förmige, einseitig offene Schiene, in deren mittleren Freiraum sich jeweils der Wellenleiter befindet.

Und dieser Effekt wird erreicht, unabhängig davon ob der hohle Rückleiter aus einem rohrartigen, also steifen Gebilde, besteht, oder aus einem flexiblen, schlauchartigen Gebilde. Auch Durchbrüche in der Mantelfläche, sei es in einem starren Rohr oder in einem z. B. durch ein Geflecht gebildeten Schlauch oder parallel laufenden oder spiralig gekrümmten einzelnen Fasern sind unschädlich, solange hierdurch eine ausreichende magnetische Abschirmung des Wellenleiters umfänglich insgesamt bewirkt wird. Dabei können sich im Falle einzelner Fasern oder Drähte des hohlen Rückleiters die einzelnen Fasern/Drähte berühren, was besonders bei einem schlauchartigen Geflecht der Fall ist, oder keine Berührung aufweisen, beispielsweise wenn eine oder mehrere Fasern in Längsrichtung verlaufend oder spiralig im Mantel nebeneinander befindlich in einem Trägermaterial z. B. aus Kunststoff aufgenommen sind.

Besonders vorteilhaft ist es, wenn der hohle Rückleiter einen umfänglich geschlossenen Querschnitt aufweist.

Besonders vorteilhaft ist es, wenn dieser hohle Rückleiter eine Wärmedehnung in Längsrichtung aufweist, die der des Wellenleiters selbst entspricht, da in diesem Fall der Rückleiter ohne Längenausgleich am Ende auch mechanisch mit dem Wellenleiter verbunden werden kann, ohne dass die unterschiedlichen Längsdehnungen bei Temperaturveränderungen zu einer Vorspannung des Wellenleiters in Längsrichtung führen, bzw. zu einer Veränderung der vorhandenen Vorspannung.

Vorzugsweise besteht der hohle Rückleiter deshalb zumindest teilweise aus Titan oder Kohlefaser.

Sofern doch unterschiedliche Längendehnungen zu berücksichtigen sind, ist der hohle Rückleiter vorzugsweise in Längsrichtung dehnbar, insbesondere unter so geringer Veränderung seiner Spannung in Längsrichtung dehnbar, dass selbst bei Verbindung des hohlen Rückleiters mit dem Wellenleiter am freien Ende die Längenausdehnung des Wellenleiters genügt, um den Rückleiter entsprechend in Längsrichtung mit zu dehnen.

Um die beschriebenen Effekte möglichst optimal nutzen zu können, wird der Wellenleiter in einer definierten Position innerhalb des Querschnittes des hohlen Rückleiters, insbesondere koaxial in dessen Mitte, angeordnet, z. B. mit Hilfe eines Abstandsrohres oder Abstandsschlauches, das bzw. der vorzugsweise zwischen Wellenleiter und Rückleiter aus elektrisch nicht leitendem und nicht magnetischem Material, z. B. Kunststoff besteht.

Dabei sind die Querschnitte dieser drei Teile relativ zueinander so bemessen sein, dass über den Großteil der Länge des Wellenleiters keine radialen Kräfte gegen den Wellenleiter aufgebracht werden, mit Ausnahme an den an definierten axialen Abständen und Stellen bewirkten Lagerungen des Wellenleiters. Dies wird bewirkt, indem bei Verwendung eines hohlen Rückleiters in Form eines z. B. eigenstabilen Rohres, dieser hohle Rückleiter in seinem Innenquerschnitt etwa durch Zusammendrücken (über den gesamten Umfang oder nur an zwei einander gegenüberliegenden Bereichen) an diesen Stellen reduziert wird, und dadurch auch der als Abstandshalter dienende Abstandsschlauch zusammengedrückt und gegen den Außenumfang des Wellenleiters angedrückt wird.

Auch auf dem Außenumfang des hohlen Rückleiters ist zur Beabstandung gegenüber einem Tragprofil oder ähnlichem, in welches der Positionssensor, insbesondere vollständig eingeschoben werden kann vorzugsweise ein Außenabstandshalter angebracht. Dieser Außenabstandshalter besteht aus einem vorzugsweise in radialer Richtung etwas komprimierbaren, darüber hinaus elektrisch nicht leitenden und nicht magnetisierbaren Material, insbesondere aus Textilmaterial oder Kunststoff, welches beispielsweise radial nach außen vorstehende Fasern, Borsten oder andere Vorsprünge aufweisen kann. Ein solcher Außenabstandshalter kann als helixförmiger oder in Längsrichtung verlaufender Streifen auf dem Außenumfang des hohlen Rückleiters angeordnet sein.

Eine Möglichkeit hierzu ist ein Rohr oder Schlauch aus einem Kunststoff, etwa Silikon, auf dessen umfänglich geschlossenem Rohrquerschnitt zusätzlich radial nach außen und/oder gegebenenfalls auch nach innen ragende, zum freien Ende hin vorzugsweise spitz zulaufende Erhebungen vorhanden sind, die eine entsprechende Lagerung der Teile gegeneinander bewirken. Durch diese Bauformen ergeben sich einfache Herstellungsmöglichkeiten durch das simple Ineinanderschieben und gegebenenfalls in axialen Abständen definiertes Verquetschen der einzelnen Teile gegeneinander.

Gegenüber diesem Mittelbereich ist der Detektorbereich, in dem die Detektorspule positioniert ist, vorzugsweise an einem der beiden Enden des Wellenleiters angeordnet.

Durch das Anordnen der Detektorspule konzentrisch um den Wellenleiter herum und das zusätzliche Anordnen eines Flussleitkörpers wenigstens teilweise um die Detektorspule herum wird wiederum die Qualität der erzielten Signale, insbesondere die Relation von Nutzsignalen zu Störsignalen, verbessert.

Besonders vorteilhaft ist es dabei, wenn durch den Flussleitkörpers - z. B. in der Seitenansicht zum Wellenleiter betrachtet - etwa zusammen mit dem Wellenleiter ein möglichst gut geschlossener magnetischer Kreis gebildet wird, ohne dass der Flussleitkörper den Wellenleiter hierbei kontaktieren darf. Zwischen diesen beiden Bauteilen ist ein vorteilhafter Weise sehr geringer Spalt vorhanden, der beispielsweise durch eine dünne Folie aus isolierendem Kunststoff gefüllt ist. Natürlich kann der Flussleitkörper den Wellenleiter - diesmal in Längsrichtung betrachtet - auch vollständig umgeben, was eine besonders gute Abschirmung ergibt.

Der vorbeschriebene Effekt wird zusätzlich verbessert, indem die gesamte Detektoranordnung, also die Detektorspule sowie das diese umgebende Flussleitstück, zusätzlich von einer Abschirmung aus hoch permeablen Material, insbesondere einer Hülse, der so genannten Detektorhülse, umgeben ist.

Die Detektorhülse ist mit dem hohlen Rückleiter elektrisch und auch mechanisch verbunden, indem die Detektorhülse einen Innendurchmesser aufweist, der etwas größer als der Außendurchmesser des hohlen Rückleiters ist, sich in axialer Richtung bis über dessen Beginn hinaus erstreckt und mit dem Außenumfang des hohlen Rückleiters mechanisch fest verbunden ist, also beispielsweise durch elektrisch leitendes Verkleben, Verlöten, Verschweißen, oder auch Vercrimpen, sofern dabei auch eine elektromagnetisch dichte Verbindung erzielt wird. Zusätzlich sollte die Detektorhülse auf ihrer Außenseite eine elektrisch isolierende Schicht besitzen, um in ein Tragprofil aus elektrisch leitendem Material eingeschoben werden zu können.

Aus einem derart hergestellten Detektorkopf ragen dann stirnseitig aus dem freien Ende der stirnseitig offenen Detektorhülse nur noch vier elektrische Leiter hervor, nämlich zwei als Anschlüsse für die Detektorspule, einer als Anschluss für den Wellenleiter und einer als Anschluss für den hohlen Rückleiter, so dass insbesondere eine Steckereinheit zum Kontaktieren dieser vier elektrischen Leiter an der offenen Stirnseite dieser ansonsten geschlossenen und mit dem hohlen Rückleiter verbundenen Detektorhülse angeordnet werden kann, wodurch deren elektromagnetische Dichtigkeit zusätzlich erhöht werden kann.

Am freien, von der Detektoranordnung abgewandten Ende des Wellenleiters, den so genannten Dämpfungsbereich wird die Erzielung eines guten Signals gefördert und gleichzeitig die Herstellbarkeit des Sensors vereinfacht, indem dort der Wellenleiter in eine Dämpfungsanordnung hineinragt, in der die entlang des Wellenleiters laufende mechanisch-elastische Welle bis zum absoluten Ende des Wellenleiters zunehmend herunter gedämpft wird, so dass von dort nach Möglichkeit keine Welle mehr in Gegenrichtung zurückreflektiert wird.

Zu diesem Zweck ragt der Wellenleiter aus dem Abstandsschlauch des mittleren Bereiches hervor und in die Dämpfungsanordnung hinein, oder der Abstandsschlauch ist - gegebenenfalls in verändertem Zustand - selbst Bestandteil der Dämpfungsanordnung.

So kann in einer sehr einfachen Ausführungsform der bereits vorhandene Abstandsschlauch am freien Ende kürzer gewählt werden als der Wellenleiter und der hohler Rückleiter, so dass diese beiden Teile am Ende direkt miteinander kontaktiert, z. B. mechanisch fest und elektrisch leitend gegeneinander verbunden werden. Die Dämpfungsanordnung wird dadurch realisiert, dass der hohle Rückleiter zum freien Ende hin hinsichtlich axialer Länge und/oder radialer Einprägung zunehmend in kürzeren Abständen und stärker verquetscht wird.

Eine andere Möglichkeit besteht darin, die radiale Anpressung im Dämpfungsbereich mittels eines Schrumpfschlauches aus Kunststoff über eine definierte Länge auf den Wellenleiter aufzubringen, evtl. auch unter Zwischenlage des Abstandsschlauches.

Anstelle des hohlen Rückleiters kann im Dämpfungsbereich auch eine separate Endhülse für die vorbeschriebenen Zwecke verwendet werden, die dann jedoch wieder mit dem freien Ende des koaxialen Rückleiters elektrisch leitend verbunden werden muss und zu dieser einen möglichst geringen axialen Spalt offen lassen sollte.

Auch eine derartige Endhülse sollte aus elektrisch leitendem Material, insbesondere Metall, bestehen.

**c) Ausführungsbeispiele**

Eine Ausführungsform gemäß der Erfindung ist im Folgenden anhand der Figuren beispielhaft näher beschrieben. Es zeigen:

Fig. 1: die Gesamtansicht des Positionssensors,
Fig. 2: eine Querschnittsdarstellung im mittleren Bereich,
Fig. 3: eine erste Variante des Außenabstandshalters,
Fig. 4: eine zweite Variante des Außenabstandshalters,
Fig. 5: erste Bauformen der Detektoranordnung,
Fig. 6: eine weitere Bauform der Detektoranordnung,
Fig. 7: eine erste Bauform der Dämpfungsanordnung,
Fig. 8: eine zweite Bauform der Dämpfungsanordnung und
Fig. 9: weitere Ausführungsformen des Positionssensors im Längsschnitt.

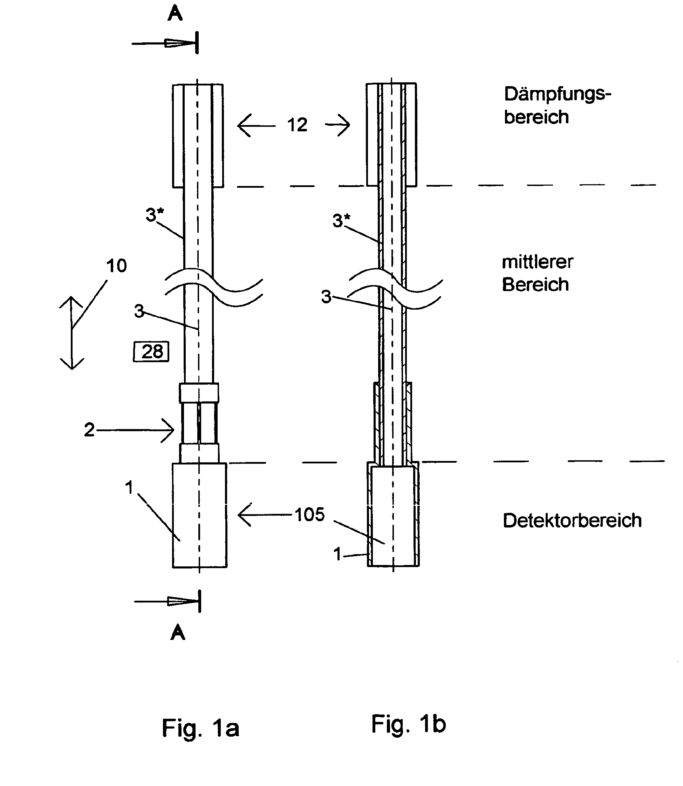

Die Fig. 1 a und 1 b zeigen in Seitenansicht bzw. Längsschnitt in Prinzipdarstellung den Positionssensor, jedoch nicht mit allen seinen Bauteilen:

In Längsrichtung, vor allem im mittleren Bereich, verläuft der hohle Rückleiter 3* und in dessen Inneren koaxial, angedeutet durch die strichpunktierte Linie, der Wellenleiter 3. Dieser besteht in der Praxis aus einem massiven Draht bzw. Stab oder einem Rohr, vorzugsweise mit rundem Außenquerschnitt, aus einem elektrisch leitfähigem Material mit spezifischen magnetischen Eigenschaften. Im Praxiseinsatz wird der Positionsmagnet 28 in Messrichtung 10, also parallel zur Erstreckungsrichtung des Wellenleiters 3, bewegt und dessen Position durch die Detektoranordnung 105 und eine eventuell damit verbundene Detektorschaltung ermittelt.

Die Detektoranordnung 105 befindet sich an einer Stelle, vorzugsweise am einen Ende, des Wellenleiters 3, während sich am anderen Ende, dem so genannten freien Ende, ebenfalls koaxial um den Wellenleiter 3 herum eine Dämpfungsanordnung 13 befindet, wodurch der Dämpfungsbereich definiert wird.

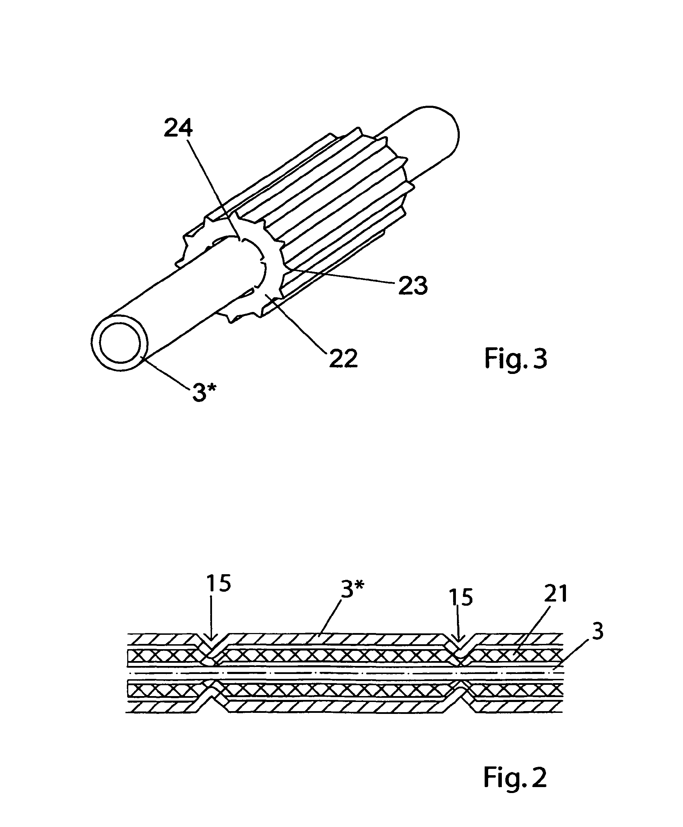

Fig. 2 zeigt einen vergrößerten Längsschnitt aus dem mittleren Bereich:

Dabei wird deutlich, dass der zentral verlaufende Wellenleiter 3 in dieser zentralen koaxialen Lage im hohlen, insbesondere rohrförmigen, Rückleiter 3* mit Hilfe eines dazwischen angeordneten, dem Wellenleiter 3 ebenfalls koaxial umschließenden Abstandsschlauches 21 gehalten wird. Dieser ist so dimensioniert, dass er innerhalb des normalen Querschnittes des hohlen Rückleiters 3* weder an dessen Innenumfang noch an dem Außenumfang des Wellenleiters 3 unter Druck anliegt.

Lediglich an den in bestimmten axialen Abständen bzw. Positionen angebrachten Lagerstellen 15 ist ein solches Anliegen in radialer Richtung mit Druck der Fall, hervorgerufen durch eine Verquetschung des hohlen Rückleiters 3* an diesen Lagerstellen 15 radial nach innen und dadurch einem Andrücken des Abstandsschlauches 21 an diesen Stellen gegen den Wellenleiter 3.

Was in den Fig. 1 und 2 noch nicht eingezeichnet ist, ist ein Außenabstandshalter auf dem Außenumfang des hohlen Rückleiters 3', um diesen gegenüber einem größeren Innenumfang mit einem Stützprofil oder einen ähnlichen Bauteil definiert zu positionieren. Hierzu dient gemäß Fig. 3 entweder ein - vorzugsweise über die gesamte Länge des mittleren Bereiches - koaxial über den hohlen Rückleiter 3* aufgeschobener Außenschlauch 22 z. B. aus Silikon, dessen Querschnittsprofil über den Umfang verteilt sowohl nach außen weisende spitze Erhebungen 23 z. B. in Längsrichtung verlaufende Stege als auch vom Innenumfang nach Innen, also gegen den hohlen Rückleiter 3* anliegende, Erhebungen 24 aufweist. Die Erhebungen 23, 29 sind so dimensioniert, dass sie durch die dort anliegenden Bauteile jeweils etwas flach gedrückt werden und damit trotz der Möglichkeit des axialen Verschiebens und Einschiebens eine stabile Lagerung bewirken.

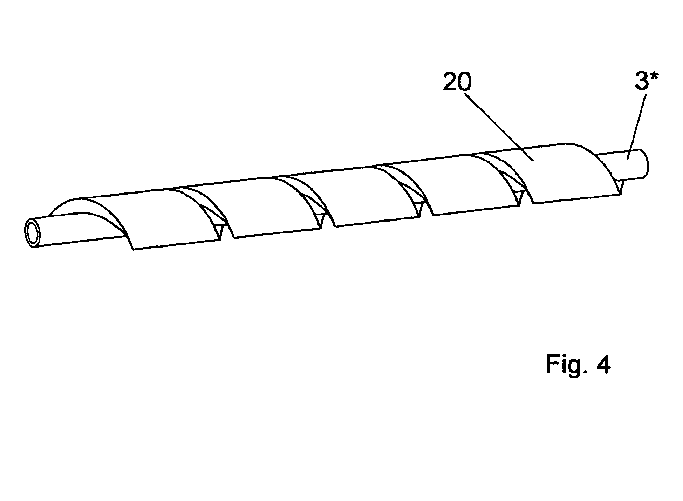

Fig. 4 zeigt als Alternative hierzu einen Außenstreifen 24, der in Form einer z. B. eingängigen Helix auf dem Außenumfang des hohlen Rückleiters 3* aufgeklebt ist und in radialer Richtung komprimiert werden kann, z. B. aufgrund seiner inneren Struktur, etwa Fasern, Borsten oder ähnlichem.

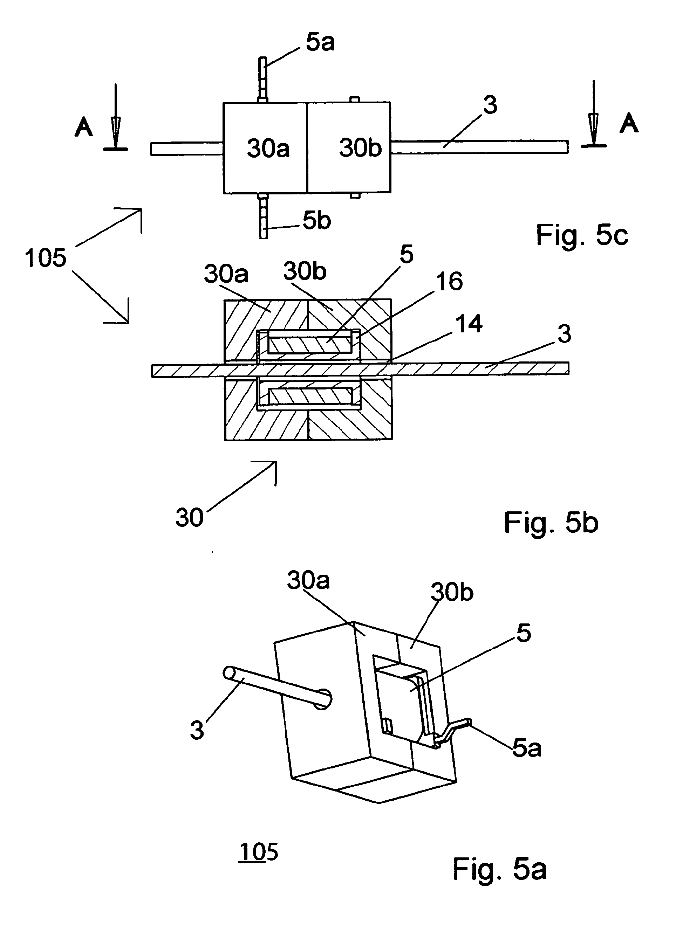

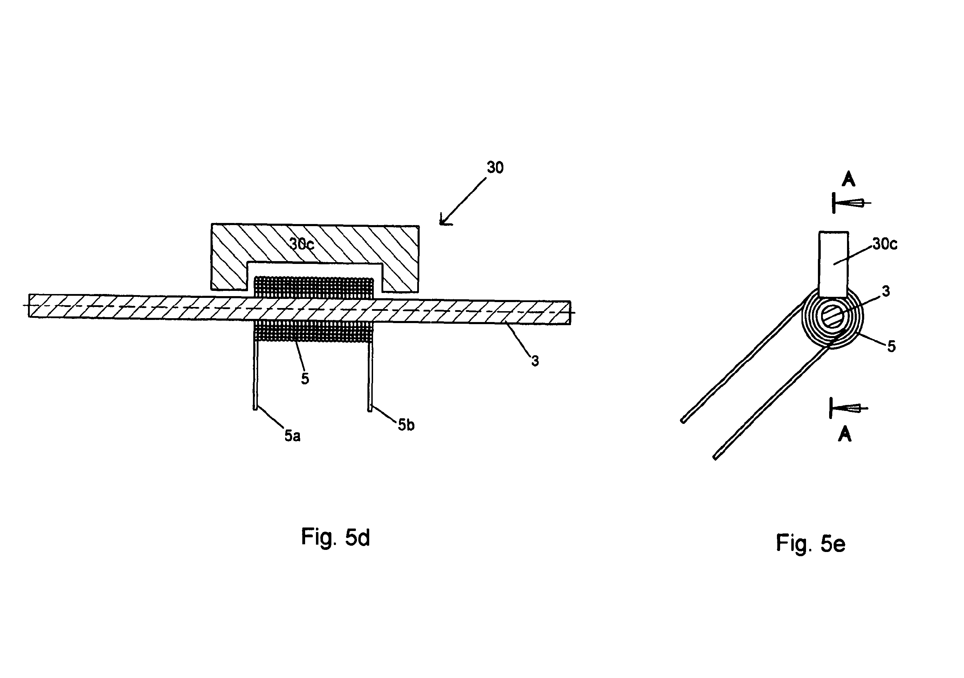

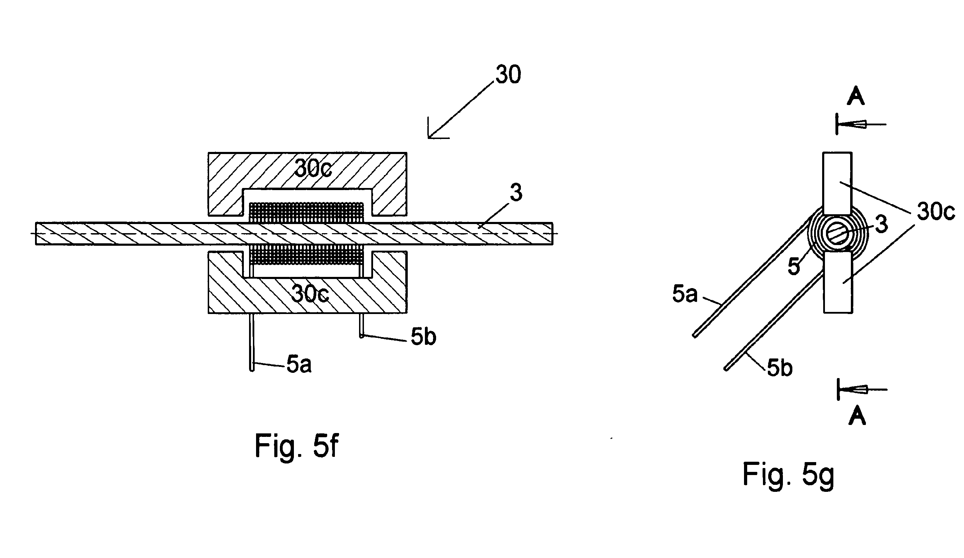

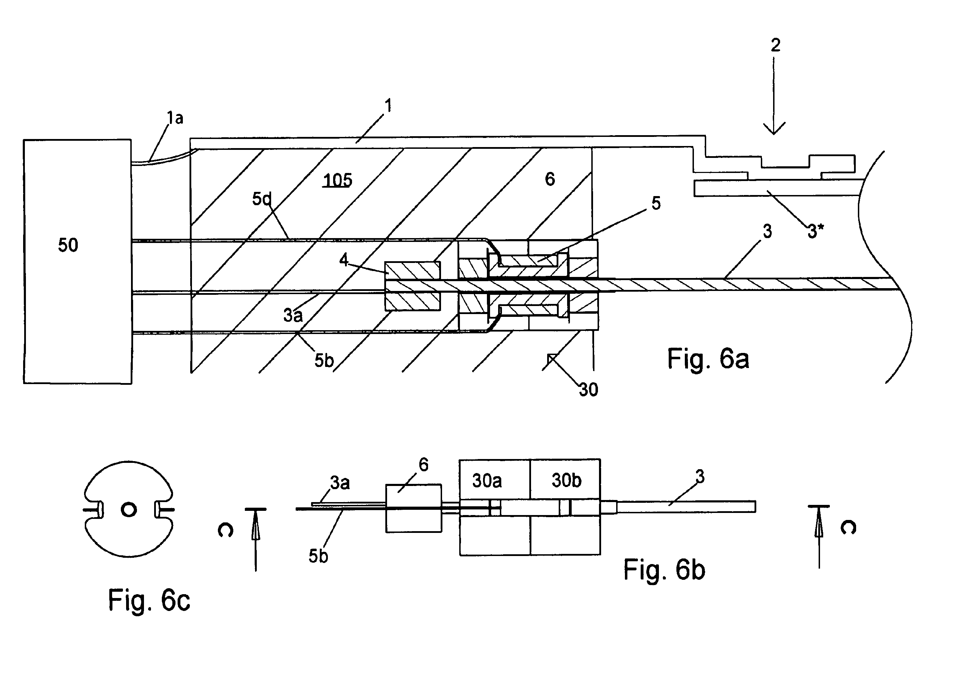

Die Fig. 5 und 6 betreffen die im Detektorbereich angeordnete Detektoranordnung 105:

Wie die Fig. 5a perspektivisch und Fig. 5b, c in zwei verschiedenen Seitenansichten bzw. Schnitten für eine erste Bauform zeigen, ist im Detektor- Bereich auf den Wellenleiter 3 eine auf einen Spulenkörper 16 aus isolierendem Material gewickelte Detektorspule 5 aufgeschoben, so dass der Wellenleiter 3 die Spule 5 vorzugsweise koaxial durchdringt.

Die Detektorspule 5 ist - wie in der Seitenansicht der Fig. 5b zu erkennen - in der Seitenansicht ringförmig annähernd von einem Flussleitkörper 30 umschlossen, der aus zwei C-förmigen Hälften 30a, b besteht, bei denen in der Mitte ihres verbindenden Schenkels jeweils eine Durchgangsöffnung zum Aufschieben auf den Wellenleiter 3 von der jeweiligen Seite belassen ist, so dass die beiden Hälften mit ihren freien Schenkeln bis auf Berührung gegeneinander geschoben werden können. Vor diesem Aufschieben wird auf den Wellenleiter 3 eine Isolierhülse 14 aufgeschoben, um mechanischen und damit auch elektrischen Kontakt zwischen dem Wellenleiter 3 und dem Flussleitkörper 30 zu vermeiden. Hierzu erstreckt sich die Isolierhülse 14 vorzugsweise über die gesamte Länge des Flussleitkörpers 30.

Der in der Seitenansicht ringförmige Flussleitkörper 30 ist somit zu zwei einander gegenüberliegenden Seiten hin offen, so dass aus diesen offenen Seiten die elektrischen Anschlüsse 5a, b der Detektorspule 5 herausgeführt werden können, zu einer gegebenenfalls weiter entfernten Detektorschaltung 50, wie in der Ausführungsform der Detektoranordnung 105 in den Fig. 6 angedeutet.

Der durch den Flussleitkörper 30 ermöglichte magnetische Flussweg erstreckt sich dabei - wie am besten die Seitenansicht der Fig. 5b zeigt - entlang des durch die beiden C-förmigen Hälften 30a, b erzeugten geschlossenen Ringes. Selbst in dem Bereich, in dem der Wellenleiter 3 diese Hälften 30a, b durchdringt wird der magnetische Fluss den Weg um den Wellenleiter 3 herum nehmen, aufgrund der Isolierhülse 14 zwischen Wellenleiter 3 und Flussleitstück 30.

Für eine positive Wirkung auf das von der Detektorspule 5 erzeugte Signal ist es jedoch auch bereits ausreichend, wenn der durch das Flussleitstück 30 ermöglichte magnetische Flussweg die Detektorspule 5 auch nur teilweise umschließt, und dabei gegebenenfalls auch der Wellenleiter 3 selbst ein Teil dieses magnetischen Flussweges ist.

So zeigen die Fig. 5d und e in der Seitenansicht bzw. Stirnansicht eine Lösung, bei der an einer Stelle des Umfanges des Wellenleiters 3 und damit auch der koaxial darauf geführten Detektorspule 5 ein C-förmiges Teil 30c als Flussleitkörper 30 so über die Spule 5 gesetzt wird, dass das C-Teil 30c mit seinem freien Ende gegen den Außenumfang des Wellenleiters 3 gerichtet ist und der verbindende Schenkel des C-Teiles 30c parallel zum Wellenleiter 3 außerhalb der Spule 5 verläuft. Der magnetische Flussweg erstreckt sich dabei durch die C-Form des C-Teiles 30c und das entsprechende Stück des Wellenleiters 3 zurück, wodurch er ringförmig geschlossen wird über den Luftspalt zwischen Wellenleiter und C-Teil 30c hinweg.

Die positive Wirkung auf das Nutzsignal ist natürlich umso stärker, je mehr die Detektorspule 5 von dem magnetischen Flussweg des Flussleitkörpers 30 umschlossen wird.

Dies kann beispielsweise erreicht werden, indem mehrere C-Teile 30c über den Umfang verteilt und die Detektorspule 5 übergreifend angeordnet werden.

Die Fig. 5f und 5g zeigen in der Seitenansicht und Stirnansicht eine Lösung, bei der zwei C-Teile 30c bezüglich des Wellenleiters 3 einander diametral gegenüberliegend zu diesem Zweck angeordnet sind, jedoch kann die Anzahl der C-Teile 30c auch beliebig größer werden.

Den Idealfall stellt ein Flussleitkörper 30 dar, der die Detektorspule 5 möglichst vollständig umhüllt, da hierdurch auch eine optimal vollständige Umhüllung der Detektorspule 5 durch den magnetischen Flussweg erzielt wird.

Die Fig. 5d - g zeigen im Übrigen auch, dass die Detektorspule 5 als eigenstabile Spule ausgebildet sein kann, also nicht unbedingt auf einem Spulenwickelkörper 15 aufgebracht sein muss.

In Fig. 6a sind vor allem zusätzliche Teile der Detektoranordnung 105 zu erkennen, nämlich vor allem eine die Detektorspule 5 und den Flussleitkörper 30 mit Abstand koaxial umgebende Detektorhülse 1, die sich in Längsrichtung bis über den Beginn des hohlen Rückleiters 3' des mittleren Bereiches hinweg erstreckt und mit diesem an einer Crimpstelle 2 mechanisch fest verpresst oder anderweitig mechanisch als auch elektrisch leitend und möglichst elektromagnetisch dicht miteinander verbunden ist, wie auch in der Übersichtszeichnung der Fig. 1 ersichtlich.

In Fig. 6a ist ferner angedeutet, dass nach Fertigstellung der Bereich des Flussleitkörpers 30 bis nahe des freien Endes der Detektorhülse 1 hin mittels einer aushärtenden, elektrisch nicht leitenden Vergussmasse wie etwa Kunstharz vergossen werden kann, und dann zum Anschließen der Detektoranordnung 105 an eine entfernt liegende Detektorschaltung 50 nur vier Verbindungsleitungen zur Detektoranordnung 105 notwendig sind. Hierbei handelt es sich um die beiden elektrischen Anschlüsse 5a, b der Detektorspule 5, den elektrischen Anschluss 3a, der mit dem Wellenleiter 3 in Verbindung steht, und dem Anschluss 1a, der mit der Detektorhülse 1 und über diese mit dem hohlen Rückleiter 3* in Verbindung steht.

Fig. 6a zeigt ferner, dass an dem freien Ende des Wellenleiters 3 auf der vom mittleren Bereich abgewandten Seite an diesem ein plattenförmiges Ankerteil 4 mechanisch fest und vorzugsweise auch elektrisch leitend befestigt ist, welches der sicheren Verankerung dieses Endes des Wellenleiters 3 an einem Bauteil der Umgebung, beispielsweise dem späteren Verguss, also der ausgehärteten Vergussmasse 6, dient.

Auch die beiden Hälften 30a, b des Flussleitkörpers 30 sind in der Fig. 6 geringfügig anders gestaltet, indem diese an ihren freien Seiten soweit heruntergezogen sind, dass die offene Seite gerade ausreicht, um daraus jeweils die elektrischen Anschlüsse 5a bzw. 5b für die Detektorspule 5 herauszuführen.

Auch die Ausführungsform gemäß Fig. 5a wird zu Fertigstellung des Sensors in der Detektorhülse 1 aufgenommen und gegebenenfalls ebenfalls vergossen, also analog zur Bauform der Fig. 6 gehandhabt.

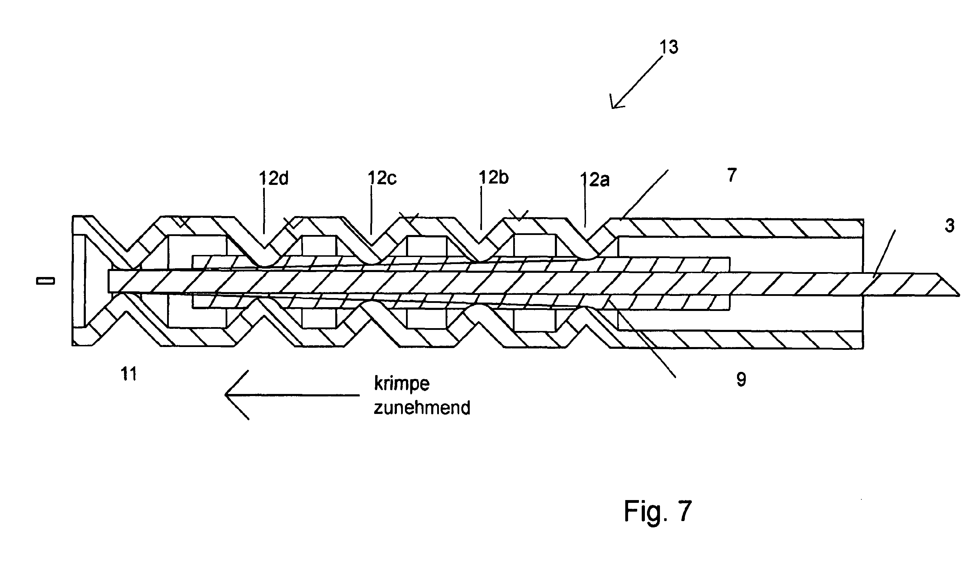

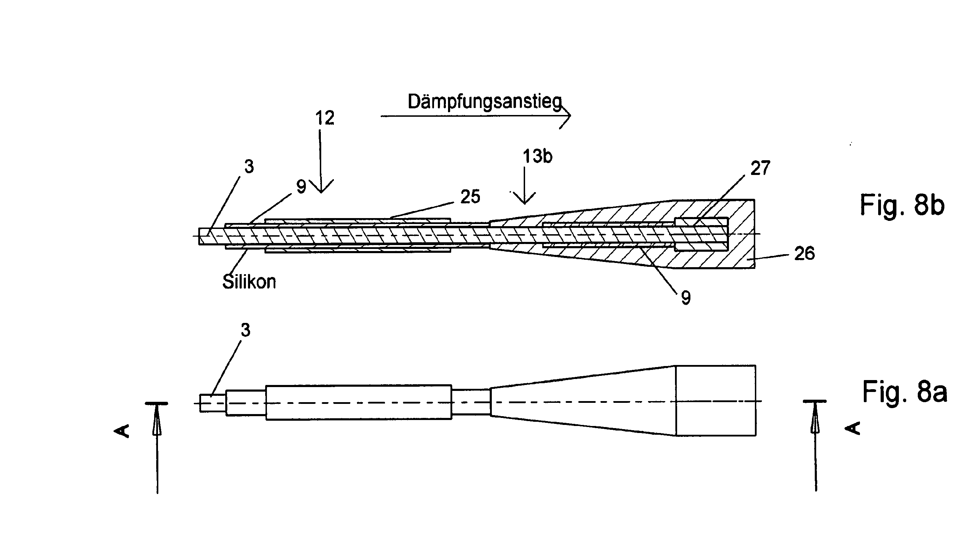

Die Fig. 7 und 8 zeigen Bauformen der Dämpfungsanordnung 13 im Dämpfungsbereich.

Gemäß Fig. 7 ist über den Endbereich des Wellenleiters 3 ein Dämpfungsschlauch 9 so aufgeschoben, dass das freie Ende des Wellenleiters 3 aus diesem Dämpfungsschlauch 9 wieder etwas hervorragt.

Das Ziel besteht darin, über die Länge des Dämpfungsschlauches hin in Richtung des freien Endes des Wellenleiters 3 dessen Dämpfung soweit zunehmen zu lassen, dass eine hier ankommende mechanisch-elastische Welle im Wellenleiter in der Dämpfungsanordnung 13 bis auf Null herabgedämpft wird.

Zu diesem Zweck ist auch über den Endbereich und koaxial mit Abstand um den Dämpfungsschlauch 9 herum eine Endhülse 7 angeordnet, deren Innendurchmesser im Ausgangszustand einen Abstand zum Außendurchmesser des Dämpfungsschlauches 9 einhält. Durch radiales Zusammenpressen (z. B. Crimpen) vorzugsweise jeweils über den gesamten Umfang (mit zusätzlicher separater Crimphülse oder direktes Crimpen der Endhülse) erreicht an den Crimpstellen 12a - d der Innenumfang der Endhülse 7 den Außendurchmesser des Dämpfungsschlauches 9 und dringt in diesen etwas ein, und zwar zunehmend mit jeder Crimpstelle 12a... in Richtung zum freien Ende des Wellenleiters 3 hin.

Somit nimmt an den einzelnen Crimpstellen die radiale Druckbeaufschlagung des Wellenleiters und damit die Dämpfung immer mehr zu. Die letzte Crimpstelle befindet sich bereits im Bereich außerhalb des Dämpfungsschlauches 9, wobei die Endhülse 7 direkt den Außenumfang des Wellenleiters 3 erreicht und nach dem Crimpen mit diesem in Kontakt bleibt, wodurch die endseitige elektrische Kontaktierung zwischen dem Wellenleiter 3 und der Endhülse 7 gebildet wird.

Für die Rückleitung des elektrischen Impulses ist diese Endhülse 7 elektrisch leitend mit dem hohlen Rückleiter 3* verbunden und kann auch einstückig zusammen mit diesem ausgebildet sein oder auf diesen aufgeschoben und insbesondere mechanisch fest mit diesem verbunden sein.

Die Fig. 8 zeigen eine andere Form der Dämpfungsanordnung 13, nämlich mit einem am freien Ende angeordneten Hauptdämpfer 13b und einen demgegenüber zurückversetzten Vordämpfer 13a.

Der Vordämpfer 13a kann beispielsweise ebenfalls aus einem auf dem Wellenleiter 3 aufgeschobenen Dämpfungsschlauch 9, etwa aus Silikon oder einem anderen Kunststoff bestehen, über den wiederum koaxial ein die axiale Vorspannung aufbringendes Element, etwa ein Schrumpfschlauch oder eine Vorklemmhülse 25, aufgeschoben und gegebenenfalls vercrimpt ist.

Der Hauptdämpfer 13b verfolgt den gleichen Zweck wie in Fig. 7 beschrieben, ist jedoch gemäß Fig. 8b anders aufgebaut, indem dort axial hintereinander zuerst ein Dämpfungsschlauch 9, wiederum beispielsweise aus Silikon oder einem anderen weichen Kunststoff bestehend, und axial anschließend daran zum elektrischen Kontaktieren des Wellenleiters eine Kontakthülse 27 direkt auf dem Wellenleiter 3 aufgeschoben ist. Von dieser Kontakthülse 27 aus ist auch die elektrische Verbindung zu dem Rückleiter, insbesondere einen umgebenden hohlen Rückleiter 3*, möglich.

Für das Bewirken der Dämpfung sind der Dämpfungsschlauch 9 und die Kontakthülse 27 vorzugsweise über die gesamte Länge und einschließlich der freien endseitigen Stirnfläche von einer Endhülle 26 aus Kunststoff umschlossen, insbesondere eingegossen, wobei die Endhülle 26 zum freien Ende hin in ihrem Außendurchmesser ansteigt, insbesondere konisch ansteigt, wodurch die Dämpfung zum Ende hin stärker wird.

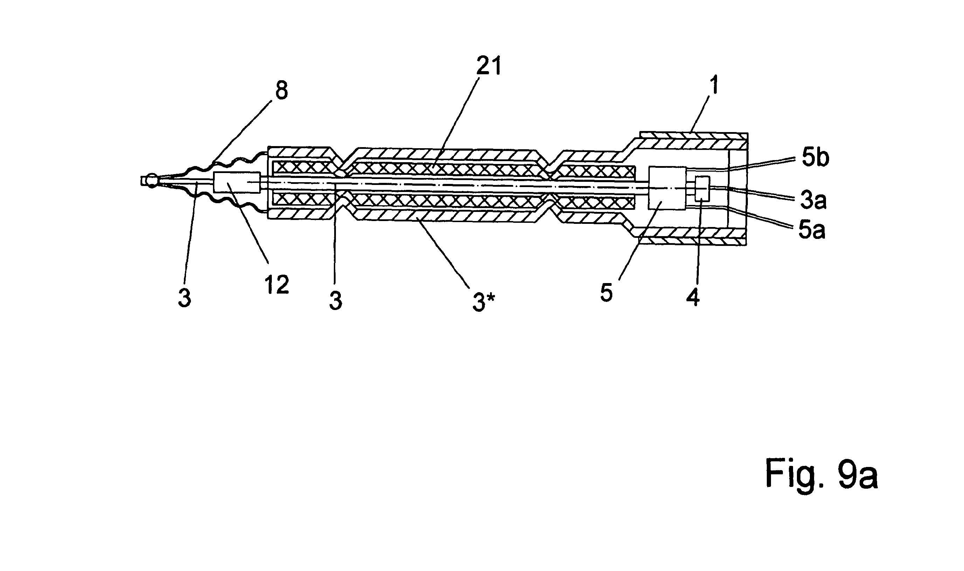

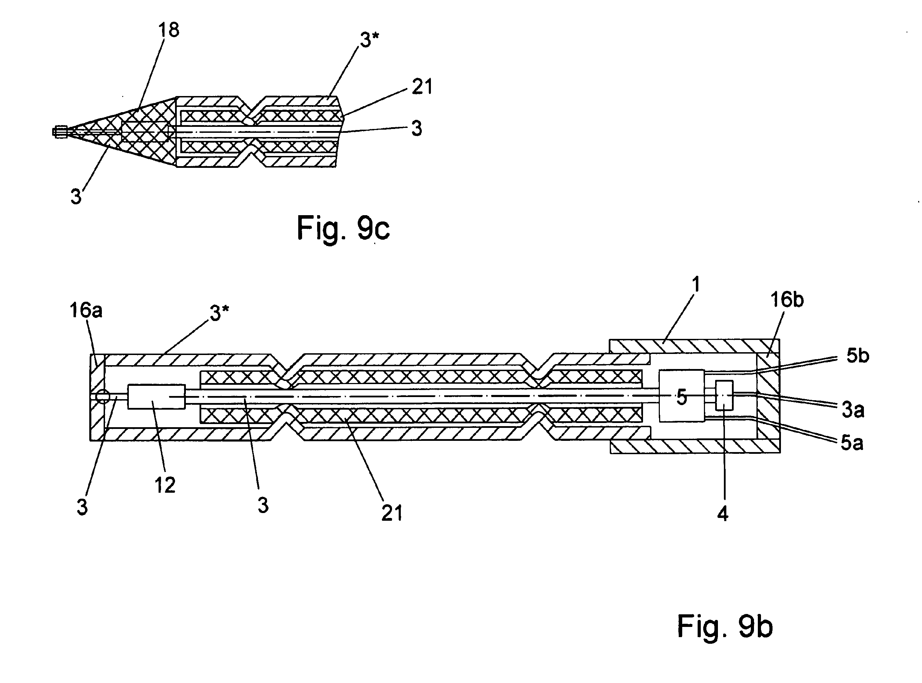

Die Fig. 9a und 9c zeigen Ausführungsformen, die im mittleren Bereich - der verkürzt dargestellt ist - dem Aufbau gemäß Fig. 2 entsprechen.

Im Detektorbereich, dem rechten Ende in Fig. 9a, zeigt diese Lösung jedoch eine andere Ausgestaltung als z. B. Fig. 6a:

In Fig. 9a erstreckt sich der hohle Rückleiter 3* vom mittleren Bereich aus auch über den gesamten Detektorbereich, so dass sich die Detektorspule 5 und ebenso das Ankerteil 4 auf dem Ende des Wellenleiters 3 noch innerhalb des axialen Bereiches des hohlen Rückleiter 3* befinden. Allerdings ist der hohle Rückleiter 3* im Detektorbereich aufgeweitet gegenüber dem mittleren Bereich und besitzt hier einen größeren Innendurchmesser.

Auf dem ebenfalls vergrößerten Außendurchmesser des hohlen Rückleiters 3* ist eine Detektorhülse 1, die vorzugsweise aus hochpermeablem Material, insbesondere aus μ-Metall, besteht, aufgeschoben und vorzugsweise fest verbunden.

Aus dem dann gemeinsamen offenen Ende von Detektorhülse 1 und hohlem Rückleiter 3* ragen unter anderem die elektrischen Anschlüsse, nämlich die Anschlüsse 5a, b für die Detektorspule 5 und der elektrische Anschluss 3a für den elektrischen Leiter 3, hervor.

Im Gegensatz dazu ist gemäß Fig. 9b der Detektorbereich so gestaltet, dass hier der hohle Rückleiter 3* vom mittleren Bereich kommend in axialer Richtung die Detektorspule 5 nicht ganz erreicht, und auch an diesem Ende keine aufgeweiteten Durchmesser besitzt.

Die Detektorhülse 1 deckt in axialer Richtung den gesamten Detektorbereich ab, und ist im Überlappungsbereich, zwischen mittleren Bereich und Detektorbereich, mit ihrem Innendurchmesser passend auf den Außendurchmesser des hohlen Rückleiters 3* aufgeschoben und mit diesem dicht verbunden.

Zusätzlich ist das hintere freie offene Ende der Detektorhülse 1 durch einen eingesetzten Deckel 16b verschlossen, der vorzugsweise aus nicht elektrisch leitendem Material besteht, da er von den elektrischen Anschlüssen durchdrungen werden muss.

Der Dämpfungsbereich am linken Ende in Fig. 9a ist dadurch gekennzeichnet, dass sich dort der Wellenleiter 3 in axialer Richtung über den Abstandsschlauch 21 und den hohlen Rückleiter 3* hinaus erstreckt und in diesem Überstandsbereich auch die Dämpfungsanordnung 12 trägt.

Der Wellenleiter 3 ragt insbesondere noch über die Dämpfungsanordnung 12 hinaus und ist an seinem freien Ende elektrisch leitend mit wenigstens einem elektrischen Leiter 8 verbunden, dessen anderes Ende elektrisch leitend mit dem hohlen Rückleiter 3* verbunden ist. Der elektrische Leiter 8 ist dabei gewellt, spiralig oder auf andere Art und Weise längenausgleichend gestaltet, um unterschiedliche Längendehnungen des Wellenleiters 3 einerseits und des hohlen Rückleiters 3* andererseits auszugleichen. Insbesondere kann der elektrische Leiter 8 dabei als Feder mit Vorspannung in axialer Richtung ausgebildet sein, und dadurch vom hohlen Rückleiter aus das freie kontaktierte Ende des Wellenleiters 3 vom Ende des Rückleiters 3* aus wegschieben, so dass also der Wellenleiter 3 niemals auf Druck beansprucht ist, sondern unbeansprucht oder auf Zug belastet ist.

Fig. 9c zeigt an dieser Stelle ein anderes Detail, in dem vom vorderen Ende des Wellenleiters 3 aus ein Gewebe 18 aus elektrisch leitendem Material den Wellenleiter 3 vorzugsweise vollständig umgebend sich bis zu dem frei endenden Umfang des hohlen Rückleiters 3* erstreckt.

Im Gegensatz dazu erstreckt sich bei Fig. 9b der hohle Rückleiter 3* auch über den Dämpfungsbereich hinweg, so dass sich der aus dem Abstandsschlauch 21 austretende Wellenleiter 3 mit darauf angeordneter Dämpfungsanordnung 12 noch innerhalb des axialen Bereiches des hohlen Rückleiters 3* befindet.

An seinem freien Ende ist dieser mittels aufgesetzten Deckels 16a verschlossen, der jedoch diesmal aus elektrisch leitfähigem Material besteht und elektrisch leitend im Zentrum mit dem Wellenleiter 3 und im Umfangsbereich mit der Stirnfläche des hohlen Rückleiters 3* verbunden ist.

**Patentansprüche**

1.  Positionssensor nach dem Laufzeitprinzip einer mechanisch-elastischen Welle mit

    - einem Wellenleiter (3),
    - einem elektrischen Rückleiter (3*),
    - einer am Wellenleiter (3) im Detektorbereich angeordneten Detektor-Spule (5), sowie
    - einem Positionsmagneten (28), welcher entlang des Wellenleiters (3) bewegbar ist, wobei
    - in dem zwischen dem Detektorbereich (105) und dem davon abgewandten freien Ende des Wellenleiters (3) liegenden Mittelteil der Wellenleiter (3) innerhalb eines hohlen Rückleiters (3*) aus elektrisch leitfähigem, nicht magnetischem Material angeordnet ist,
    - im Detektorbereich (105) die Detektorspule (5) konzentrisch um den Wellenleiter (3) angeordnet ist,

    **dadurch gekennzeichnet, dass**

    - der Detektorspule (5) ein Flussleitkörper (30) zugeordnet ist,
    - eine Detektorhülse (1) sich bis auf den Außenumfang des Stützrohres (3*) in axialer Richtung erstreckt und mit diesem Außenumfang fest und elektromagnetisch dicht verbunden ist,
    - am freien Ende des Wellenleiters (3) eine Dämpfungsanordnung (12) in einem Dämpfungsbereich angeordnet ist, indem der Wellenleiter (3) in die Dämpfungsanordnung (12) hineinragt,
    - der Wellenleiter (3) in einer definierten Position innerhalb des Querschnittes des hohlen Rückleiters (3*) angeordnet ist mithilfe eines Abstandsschlauches (21) aus elektrisch nicht leitendem und nicht magnetischem Material als Abstandshalter, der zwischen Wellenleiter (3) und Rückleiter (3*) angeordnet ist,
    - wobei die Querschnitte dieser drei Teile relativ zueinander so bemessen sind, dass über den Großteil der Länge des Wellenleiters (3) keine radialen Kräfte gegen den Wellenleiter (3) aufgebracht werden, mit Ausnahme an den an definierten axialen Abständen und Stellen (12) bewirkten Lagerungen des Wellenleiters (3),
    - indem der hohle Rückleiter (3*) in Form eines eigenstabilen Rohres in seinem Innenquerschnitt durch Zusammendrücken an diesen Stellen reduziert wird und dadurch auch der als Abstandshalter dienende Abstandsschlauch zusammengedrückt und gegen den Außenumfang des Wellenleiters (3) angedrückt wird.

2.  Positionssensor nach Anspruch 1,
    **dadurch gekennzeichnet, dass**

    - der hohle Rückleiter (3*) eine Wärmedehnung in Längsrichtung aufweist, die der des Wellenleiters (3) entspricht.

3.  Positionssensor nach Anspruch 1 oder 2,
    **dadurch gekennzeichnet, dass**

    - der Detektorspule (5) der Flussleitkörper (30) so zugeordnet ist, dass er gleichzeitig die Detektorspule (5) gegen unerwünschte äußere Magnetfelder abschirmt.

4.  Positionssensor nach einem der vorhergehenden Ansprüche,
    **dadurch gekennzeichnet, dass**

    - der magnetische Flussweg des durch den Flussleitkörper (30) ermöglichten magnetischen Flusses die Windungen der Detektorspule (5) wenigstens einmal einschließt, unter Einbeziehung des Wellenleiters (3) in den Flussweg.

5.  Positionssensor nach einem der vorhergehenden Ansprüche,
    **dadurch gekennzeichnet, dass**

- der durch den Flussleitkörper (30) ermöglichte Flussweg die gesamte Spule in wenigstens einer axialen Ebene umgibt.

6. Positionssensor nach einem der vorhergehenden Ansprüche,
   **dadurch gekennzeichnet, dass**

   - die Detektoranordnung (105), nämlich die Detektorspule (5) und das Flussleitstück (30), von einer Abschirmung aus hochpermeablem Material, nämlich einer Detektorhülse (1), umgeben ist, und
   - die Abschirmung mit dem hohlen Rückleiter (3*) elektrisch verbunden ist.

7. Positionssensor nach einem der vorhergehenden Ansprüche,
   **dadurch gekennzeichnet, dass**

   - die Detektorhülse (1) sich bis auf den Außenumfang des Stützrohres (3*) in axialer Richtung erstreckt und mit diesem Außenumfang fest verbunden ist.

8. Positionssensor nach einem der vorhergehenden Ansprüche,
   **dadurch gekennzeichnet, dass**

   - die Detektorhülse (1) zum Einschieben in ein Tragprofil aus elektrisch leitendem Material am Außenumfang mit einer elektrischen Isolierschicht, vollumfänglich beschichtet ist.

9. Positionssensor nach einem der vorhergehenden Ansprüche,
   **dadurch gekennzeichnet, dass**

   - die Dämpfungsanordnung (12) aus einem den Wellenleiter (3) koaxial umgebenden Dämpfungsschlauch (9), besteht, der über eine definierte Länge mit einer definierten radialen Vorspannung am Wellenleiter (3) anliegt.

10. Positionssensor nach Anspruch 9,
    **dadurch gekennzeichnet, dass**

    - der Abstandsschlauch (21) Bestandteil der Dämpfungsanordnung (12) ist.

11. Positionssensor nach einem der Ansprüche 9 oder 10,
    **dadurch gekennzeichnet,dass**

    - die radiale Vorspannung von einer Endhülse (7) erzeugt wird, die den Dämpfungsschlauch (9) koaxial umschließt.

12. Positionssensor nach Anspruch 11,
    **dadurch gekennzeichnet, dass**

    - die Endhülse (7) in axialer Richtung über den Dämpfungsschlauch (9) hinaus ragt und mit dem äußersten, freien Ende des Wellenleiters (3) fest verbunden ist,
    - die Endhülse (7) aus elektrisch leitendem Material, besteht, und
    - der hohle Rückleiter (3*) die Endhülse (7) ist.

**Claims**

1. A position sensor according to a run time principle of a mechanical electrical wave comprising:

   - a wave conductor (3)
   - an electrical return conductor (3*)
   - a detector coil (5) arranged at the wave conductor (3) in the detector portion, and
   - a position magnet (28) that is moveable along the wave conductor (3), wherein
   - the wave conductor (3) is arranged within a hollow return conductor (3*) made form electrically conductive nonmagnetic material in a center portion of the wave conductor (3) arranged between the detector portion (105) and a free end of the wave conductor (3) oriented away from the detector portion,
- the detector coil (5) is arranged in the detector portion (105) concentric about the wave conductor (3)

**characterized in that**

- a flux conductor element (30) is associated with the detector coil (5),
- a detector sleeve (1) extends in axial direction to the outer circumference of the support tube (3*) and is fixated at the outer circumference electromagnetically tight.
- a damping arrangement (12) is arranged at a free end of the wave conductor (3) in a damping portion **in that** the wave conductor (3) extends into the damping arrangement (12),
- the wave conductor (3) is arranged in a defined position within the a cross section of the hollow return conductor (3*) through a spacer hose (21) made from electrically nonconductive and nonmagnetic material configured as a spacer which is arranged between the wave conductor (3) and the return conductor (3*),
- wherein cross sections of the three components are sized relative to one another so that no radial forces against the wave conductor (3) are applied over a major portion of a length of the wave conductor (3) besides at defined axial offsets and locations that provide supports for the wave conductor (3),
- **in that** the hollow return conductor (3*) is configured as an intrinsically stable tube is reduced in its inner cross section through compression at these locations and so that this also compresses the spacer hose that is being used as a spacer and the spacer hose is pressed against an outer circumference of the wave conductor (3).

2. The position sensor according to claim 1,
   **characterized in that**
   the hollow return conductor (3*) has a thermal expansion in longitudinal direction which corresponds to a thermal expansion of the wave conductor (3).

3. The position sensor according to claim 1 or 2,
   **characterized in that**
   the flux element (30) is associated with the detector coil (5) so that the flux element simultaneously shields the detector coil (5) against undesirable external magnetic fields.

4. The position sensor according to one of the preceding claims,
   **characterized in that**
   a magnetic flux path of the magnetic flux facilitated by the flux conductor element (30) encloses the windings of the detector coil (5) at least once while including the wave conductor (3) into the flux path.

5. The position sensor according to one of the preceding claims,
   **characterized in that**
   the flux path facilitated by the flux element (30) envelops the entire coil in at least one axial plane.

6. The position sensor according to one of the preceding claims,
   **characterized in that**

   - the detector arrangement (105), namely the detector coil (5) and the flux conductor element (30) are enveloped by a shielding made from highly permeable material, namely a detector sleeve (1), and
   - the shielding is electrically connected with the hollow return conductor (3*).

7. The position sensor according to one of the preceding claims,
   **characterized in that**
   the detector sleeve (1) extends in axial direction to an outer circumference of the support tube (3*) and is fixated at the outer circumference.

8. The position sensor according to one of the preceding claims,
   **characterized in that**
   the detector sleeve (1) is covered in its entirety with an electrical insulation layer at its outer circumference for insertion into a support profile made from electrically conductive material.

9. The position sensor according to one of the preceding claims,
   **characterized in that**

the damping arrangement (12) is made from a damping hose (9) coaxially enveloping the wave conductor (3) wherein the damping hose contacts the wave conductor (3) over a defined length with a defined radial preload.

**10.** The position sensor according to claim 9,
**characterized in that**
the spacer hose (21) is part of the damper arrangement (12).

**11.** The position sensor according to claims 9 or 10,
**characterized in that**
the radial preload is generated by an end sleeve (7) which coaxially envelops the damping hose (9).

**12.** The position sensor according to claim 11,
**characterized in that**

- the end sleeve (7) protrudes in axial direction beyond the damping hose (9) and is fixated at an outer most free end of the wave conductor (3),
- the end sleeve (7) is made from electrically conductive material, and
- the hollow return conductor (3*) is the end sleeve (7).

**Revendications**

**1.** Capteur de position selon le principe du temps de propagation d'une onde mécanique élastique, comportant:

- un guide d'ondes (3),
- un conducteur électrique de retour (3*),
- une bobine de détecteur (5) agencée sur le guide d'ondes (3) dans la zone de détecteur, ainsi que
- un aimant de position (28) qui peut être déplacé le long du guide d'ondes (3),
- dans lequel, dans la partie centrale située entre la zone de détecteur (105) et l'extrémité libre, éloignée de celle-ci, du guide d'ondes (3), le guide d'ondes (3) est agencé à l'intérieur d'un conducteur creux de retour (3*) en un matériau électriquement conducteur mais non magnétique,
- et dans lequel, dans la zone de détecteur (105), la bobine de détecteur (5) est agencée de manière concentrique autour du guide d'ondes (3),

**caractérisé en ce que**

- un corps de guidage de flux (30) est associé à la bobine de détecteur (5),
- une enveloppe de détecteur (1) s'étend en direction axiale jusqu'à la circonférence extérieure du tube de soutien (3*) et est fixée à cette circonférence extérieure de manière étanche d'un point de vue électromagnétique,
- à l'extrémité libre du guide d'ondes (3), un dispositif d'amortissement (12) est agencé dans une zone d'amortissement, le guide d'ondes (3) pénétrant dans le dispositif d'amortissement (12),
- le guide d'ondes (3) étant agencé dans une position définie à l'intérieur de la section transversale du conducteur creux de retour (3*) à l'aide d'un tuyau d'écartement (21) en un matériau électriquement non conducteur et non magnétique qui sert d'écarteur et qui est agencé entre le guide d'ondes (3) et le conducteur de retour (3*),
- les sections transversales de ces trois parties étant dimensionnées les unes par rapport aux autres de telle sorte que, sur la plus grande partie de la longueur du guide d'ondes (3), aucune force radiale n'est appliquée contre le guide d'ondes (3) sauf au niveau de logements, prévus à des distances et endroits axiaux définis (12), du guide d'ondes (3),
- le conducteur creux de retour (3*) sous forme de tube à forme stable est réduit quant à sa section transversale intérieure par serrage à ces endroits et serre ainsi également le tuyau d'écartement qui sert d'écarteur et est poussé contre la circonférence extérieure du guide d'ondes (3).

**2.** Capteur de position selon la revendication 1,
**caractérisé en ce que**
le conducteur creux de retour (3*) présente une dilatation thermique longitudinale qui correspond à celle du guide d'ondes (3).

**3.** Capteur de position selon la revendication 1 ou 2,

**caractérisé en ce que**
le corps de guidage de flux (30) est associé à la bobine de détecteur (5) de telle sorte qu'il protège simultanément la bobine de détecteur (5) contre des champs magnétiques extérieurs non souhaités.

4. Capteur de position selon l'une des revendications précédentes, **caractérisé en ce que**
le trajet du flux magnétique permis par le corps de guidage de flux (30) inclut au moins une fois les spires de la bobine de détecteur (5), en intégrant le guide d'ondes (3) dans le trajet du flux.

5. Capteur de position selon l'une des revendications précédentes, **caractérisé en ce que**
le trajet de flux permis par le corps de guidage de flux (30) entoure toute la bobine dans au moins un plan axial.

6. Capteur de position selon l'une des revendications précédentes, **caractérisé en ce que**

   - le dispositif détecteur (105), à savoir la bobine de détecteur (5) et le corps de guidage de flux (30), est entouré d'un blindage en un matériau très perméable, à savoir une enveloppe de détecteur (1), et
   - le blindage est relié électriquement au conducteur creux de retour (3*).

7. Capteur de position selon l'une des revendications précédentes, **caractérisé en ce que** l'enveloppe de détecteur (1) s'étend dans la direction axiale jusqu'à la circonférence extérieure du tube de soutien (3*) et est fixée à cette circonférence extérieure.

8. Capteur de position selon l'une des revendications précédentes, **caractérisé en ce que**, pour son introduction dans un profilé porteur en un matériau électriquement conducteur, l'enveloppe de détecteur (1) est revêtue sur toute sa circonférence extérieure d'une couche d'isolation électrique.

9. Capteur de position selon l'une des revendications précédentes, **caractérisé en ce que** le dispositif d'amortissement (12) est constitué d'un tuyau d'amortissement (9) qui entoure de manière coaxiale le guide d'ondes (3) et qui s'appuie contre le guide d'ondes (3) sur une longueur définie et avec une précontrainte radiale définie.

10. Capteur de position selon la revendication 9,
    **caractérisé en ce que**
    le tuyau d'écartement (21) fait partie du dispositif d'amortissement (12).

11. Capteur de position selon l'une des revendications 9 ou 10, **caractérisé en ce que** la précontrainte radiale est produite par un manchon terminal (7) qui entoure de manière coaxiale le tuyau d'amortissement (9).

12. Capteur de position selon la revendication 11, **caractérisé en ce que**

    - le manchon terminal (7) dépasse, dans la direction axiale, du tuyau d'amortissement (9) et est fixé à l'extrémité libre, la plus à l'extérieur, du guide d'ondes (3),
    - le manchon terminal (7) est en un matériau électriquement conducteur et
    - le conducteur creux de retour (3*) est le manchon terminal (7).

A

Dämpfungsbereich

← 12 →

3*

3*

mittlerer
Bereich

10

3

3

28

2 →

1

← 105

Detektorbereich

1

A

Fig. 1a        Fig. 1b

Fig. 3

Fig. 2

20    3*

Fig. 4

5a

A

3

30a | 30b

5b

**Fig. 5c**

105

30a   30b   5   16

14

3

30

**Fig. 5b**

30a   30b   5

3

5a

105

**Fig. 5a**

Fig. 5e

Fig. 5d

Fig. 5g

Fig. 5f

Fig. 6a

Fig. 6b

Fig. 6c

Fig. 7

EP 1 524 504 B1

Dämpfungsanstieg

12

3

9

25

13b

27

Silikon

9

26

Fig. 8b

3

A

A

Fig. 8a

Fig. 9a

Fig. 9c

Fig. 9b

EP 1 524 504 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 896714 A
- DE 19917312 A1
- US 5680041 B1
- US 5736855 A
- US 6404183 B1